# EUROPÄISCHE PATENTSCHRIFT

(11) **EP 0 758 666 B1**
(45) Veröffentlichungstag und Bekanntmachung des Hinweises auf die Patenterteilung: **09.12.1998**
(21) Anmeldenummer: 96112328.8
(22) Anmeldetag: 31.07.1996
(51) Int. Cl.: C08J 3/02, C09D 183/04, D06M 15/643, B60R 21/16

(54) **Beschichtete Airbags, Beschichtungsmaterial und Beschichtungsverfahren**
Coated airbags, coating composition and process
Airbags enduits, composition et procédé de revêtement

(30) Priorität: 01.08.1995 DE 19528225
(43) Veröffentlichungstag der Anmeldung: 19.02.1997
(73) Patentinhaber: Wacker-Chemie GmbH, 81737 München (DE)
(72) Erfinder: Müller, Johann, 84489 Burghausen (DE); Kern, Ingrid, 84503 Altötting (DE)
(74) Vertreter: Deffner-Lehner, Maria, Dr.

(56) Entgegenhaltungen:
- EP-A- 0 552 983
- EP-A- 0 553 840
- EP-A- 0 640 664
- EP-A- 0 646 672
- EP-A- 0 669 419
- EP-A- 0 681 014

## Beschreibung

Die Erfindung betrifft wäßrige Emulsionen, ein Verfahren zur ihrer Herstellung, Massen, die herstellbar sind unter Verwendung dieser wäßrigen Emulsionen, ein Verfahren zur Beschichtung von organischen Fasern unter Verwendung derartiger wäßriger Emulsionen sowie mit diesen Emulsionen beschichtete textile Substrate.

In EP-A 508 372 wird eine radikalisch vernetzende Organopolysiloxanzusammensetzung, ohne Siliconharz, in einem organischen Lösungsmittel, die für die Beschichtung von Airbags verwendet wird, beschrieben. US-A 5,208,097 beschreibt additionsvernetzende Organopolysiloxanzusammensetzungen, ohne Siliconharz, in einem organischen Lösungsmittel, die für die Beschichtung von Airbags verwendet werden. EP-A 536 723 beschreibt additionsvernetzende Organopolysiloxanzusammensetzungen, ohne Siliconharz, in einem organischen Lösungsmittel, die für die Beschichtung von Airbags verwendet werden, wobei diese Organopolysiloxane in einer speziellen Molekulargewichtsverteilung vorkommen müssen. EP-A 552 983 beschreibt additionsvernetzende Organopolysiloxanzusammensetzungen, ohne Siliconharz, in einem organischen Lösungsmittel, die für die Beschichtung von Airbags verwendet werden. Bei den verwendeten Organopolysiloxanen handelt es sich um aufwendige trivinylgestoppte Organopolysiloxane. US-A 5,254,621 und US-A 4,496,687 beschreiben kondensationsvernetzende Organopolysiloxane, die kein Harz enthalten, aber die textilschädigende Zinnverbindungen enthalten, die von nicht entfernbaren Zinnkatalysatoren stammen. EP-553 840 beschreibt einen Flüssigsilikonkautschuk, der völlig lösungsmittelfrei ist. Wäßrige Emulsionen, ohne Siliconharz, von additionsvernetzenden Organopolysiloxanen werden zur Beschichtung von Trennpapieren in DE-OS 2601159 und zur Ausrüstung von textilen Materialien in EP-PS 58 239 beschrieben.

Es ist Aufgabe der Erfindung, die Nachteile des Standes der Technik zu überwinden und insbesondere wäßrige Emulsionen zur Verfügung zu stellen, die ein geringes Beschichtungsgewicht, eine verbesserte Haftung der Beschichtung aufweisen und verbesserte Werte im Scrub Test nach ISO 5981 liefern und ein kostengünstiges Beschichtungsverfahren ermöglichen. Gegenstand der Erfindung sind wäßrige Emulsionen, dadurch gekennzeichnet, daß sie
(1) in den endständigen Einheiten SiC-gebundene Vinylgruppen aufweisende Organopolysiloxane,
(2) mindestens 3 Si-gebundene Wasserstoffatome aufweisende Organopolysiloxane der allgemeinen Formel

   (CH₃)₃SiO-(SiHRO)ₒ-(SiR₂O)ₚ-Si(CH₃)₃,

   wobei R gleiche oder verschiedene Kohlenwasserstoffreste bedeutet, die substituiert sein können und o/p im Verhältnis 1:0 bis 1:20 liegt
(3) die Anlagerung von Si-gebundenem Wasserstoff an aliphatische Mehrfachbindungen fördernden Katalysator,
(4) als Haftungsvermittler geeignete organische Siliciumverbindungen,
(5) Siliconharze,
(6) Emulgator und
(7) Wasser,
enthalten.

Bei den in den erfindungsgemäßen endständigen Einheiten SiC-gebundenen Vinylgruppen aufweisenden Diorganopolysiloxanen (1), handelt es sich vorzugsweise um beliebige Diorganopolysiloxane mit Vinylgruppen an den endständigen Einheiten, bevorzugt solche der allgemeinen Formel

(CH₂=CH)ₓSiR₃₋ₓ-O(SiR₂O)ₙSiR₃₋ₓ(CH=CH₂)ₓ

worin
R gleiche oder verschiedene Kohlenwasserstoffreste mit vorzugsweise 1 bis 18 Kohlenstoffatom(en) bedeutet, die substituiert sein können und
X 1, 2 oder 3, bevorzugt 1 und
n eine Zahl mit einem solchen Wert ist, daß die Diorganopolysiloxane (1) eine durchschnittliche Viskosität von 100 - 500 000 mPa·s bei 25 °C haben.

Bevorzugt ist ein Bereich von 200 - 200 000 mPa·s bei 25 °C und besonders bevorzugt ein Bereich von 500 - 100 000 mPa·s bei 25 °C.

Beispiele für Kohlenwasserstoffreste R sind vorzugsweise Alkylreste, wie der Methyl-, Ethyl-, n-Propyl-, Isopropyl-, Butyl-, Octyl-, Tetradecyl- oder Octadecylrest; cycloaliphatische Kohlenwasserstoffreste, wie der Cyclopentyl-, Cyclohexyl- oder Methylcyclohexylrest; Arylreste, wie der Phenylrest; Alkarylreste, wie Tolylreste; Aralkylreste, wie der Benzyl- oder Phenylethylrest. Als Beispiele für substituierte Kohlenwasserstoffreste können vorzugsweise halogenierte Reste, wie der 3,3,3-Trifluorpropyl-, 3-Chlorpropyl- oder Chlorphenylrest genannt werden. Auch Cyanalkylreste, wie der Cyanethylrest, können enthalten sein.

Reste mit ungesättigten aliphatischen Gruppen, wie der Vinyl-, Allyl-, Hexenyl- oder Cyclohexenylrest können ebenfalls enthalten sein.

Bevorzugt als Reste R sind Kohlenwasserstoffreste mit 1-10 Kohlenstoffatom(en), wobei besonders bevorzugt mindestens 80 % der als R bezeichneten organischen Reste bevorzugt Methylreste sind.

Bei den genannten Organopolysiloxanen kann es sich um gleiche Mischpolymere oder um Gemische aus verschiedenen Mischpolymeren mit jeweils gleichem Polymerisationsgrad oder verschiedenem Polymerisationsgrad handeln. Wenn die Diorganopolysiloxane verschiedene Diorganopolysiloxaneinheiten enthalten, kann eine statistische Verteilung oder eine Blockverteilung vorliegen.
Im erfindungsgemäßen Produkt ist das Diorganopolysiloxan (1) in Mengen von 10-80 Gew.%, bevorzugt in Mengen von 20-60 Gew.%, besonders bevorzugt in Mengen von 20 bis 50 Gew.% enthalten.

Organopolysiloxane (2) mit mindestens 3 Si-gebundenen Wasserstoffatomen sind vorzugsweise solche der Formel

(CH₃)₃SiO-(SiHRO)ₒ-(SiR₂O)ₚ-Si(CH₃)₃,

wobei R die oben angegebene Bedeutung haben kann und o/p im Verhältnis 1:0 bis 1:20, bevorzugt 1:0 bis 1:7 vorliegt. Die Summe aus o und p kann zwischen 10-1000 betragen, bevorzugt beträgt sie 20-200, besonders bevorzugt beträgt sie 30-100.

Es können gleiche oder verschiedene Moleküle des Organopolysiloxans (2) eingesetzt werden.

Bei den mindestens 3 Si-gebundene Wasserstoffatome je Molekül aufweisenden Organopolysiloxanen sind die nicht mit durch Wasserstoff- und Siloxansauerstoffatome abgesättigten Siliciumvalenzen vorzugsweise durch Methyl-, Ethyl- oder Phenylreste abgesättigt. Es können jedoch alle, die oben als R beschriebenen Reste, enthalten sein.

Im erfindungsgemäßen Produkt ist Organopolysiloxan (2) in Mengen von 1-40 Gew.%, bevorzugt in Mengen von 2-20 Gew.%, besonders bevorzugt in Mengen von 3-15 Gew.% enthalten.

Als die Anlagerung von Si-gebundenen Wasserstoff an aliphatische Mehrfachbindungen fördernde Katalysatoren (3) können beliebige Katalysatoren - die bekanntermaßen diese Reaktion fördern - eingesetzt werden.

Beispiele für derartige Katalysatoren sind vorzugsweise metallisches, fein verteiltes Platin (Platinsol), Ruthenium, Rhodium, Palladium oder Iridium. Diese Metalle können auch auf feste Träger, wie Siliciumdioxid, Aluminiumoxid oder Aktivkohle, keramische Materialien oder Mischoxide bzw. Mischhydroxide, aufgebracht sein. Auch Verbindungen bzw. Komplexe dieser Metalle wie
PtCl₄, H₂PtCl₆.6H₂O; Na₂PtCl₄.4H₂O Platin-Olefin-Komplexe, Platin-Alkohol-Komplexe, wie Speyers Catalyst, Platin-Alkoholat-Komplexe, Platin-Ether-Komplexe, Platin-Aldehyd-Komplexe, Platin-Keton-Komplexe, wie Umsetzungsprodukte aus Cyclohexanon und Hexachloroplatinsäure, Platin-Vinylsiloxan-Komplexe, insbesondere Platin-Divinyltetramethyldisiloxan-Komplexe mit oder ohne Gehalt an organisch gebundenem Halogen, Bis-(Gamma-Picolin)-Platindichlorid, Trimethylenpyridinplatindichlorid, Dicyclopentadienplatindichlorid,Dimethylsulfoxydiethylenplatin(2)dichlorid, sowie die Umsetzungsprodukte aus in 1-Octen gelöstem Platintetrachlorid mit sek.-Butylamin. Platinverbindungen sind als Katalysatoren im erfindungsgemäßen Produkt bevorzugt.
Es können Katalysatorgemische aber auch nur eine Art der oben genannten Katalysatoren eingesetzt werden.
Im erfindungsgemäßen Produkt können solche Mengen an Katalysatoren eingesetzt werden, daß im Falle von Platinkatalysatoren der Platingehalt im erfindungsgemäßen Gemisch zwischen 3 und 500 ppm, bezogen auf den Siloxangehalt, liegt. Bevorzugt wird ein Platingehalt von 10-200 ppm, bezogen auf die eingesetzten Polysiloxane eingesetzt.

Für die Herstellung von wäßrigen Emulsionen können beliebige Haftungsvermittler eingesetzt werden.

Als Beispiel für als Haftungsvermittler geeignete Organosiliciumverbindungen (4) werden vorzugsweise Silane mit hydrolysierbaren Resten und über Kohlenstoff an Silicium gebundene Vinyl-, Acryloxy-, Methacryloxy-, Epoxy- oder Säureanhydridgruppen eingesetzt. Auch Teilhydrolysate und/oder Mischhydrolysate solcher Silane können verwendet werden. Bevorzugt wird ein Umsetzungsprodukt aus Vinyltriacetoxysilan und dem Silan der Formel 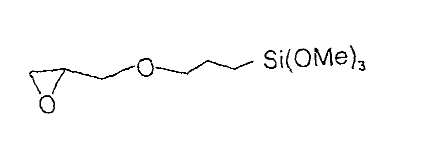 verwendet. Es kann eine Art von Haftungsvermittler verwendet werden aber auch Gemische aus zwei oder mehreren Silanen oder deren Umsetzungsprodukte, bzw. Teil- oder Mischhydrolysate können verwendet werden. Dieser Haftungsvermittler wird vorzugsweise in Mengen von 1 bis 20 Gew.%, bevorzugt in Mengen von 1 bis 10 Gew.% und besonders bevorzugt in Mengen von 2 bis 8 Gew.%, eingesetzt. Die erfindungsgemäßen Produkte können wäßrige Emulsionen von Siliconharzen (5) der allgemeinen Formel (R₃SiO_{1/2})ₐ(RSiO_{3/2})_{b}, sogenannte MT-Harze und/oder MQ-Harze der allgemeinen Formel (R₃SiO_{1/2})ₐ(SiO_{4/2})_{b}, enthalten, wobei R die oben angegebene Bedeutung hat und bevorzugt ein Methyl-, Phenyl-, Vinylrest oder Wasserstoff ist.

Das Verhältnis a zu b so gewählt wird, daß die Siliconharze in einem Viskositätsbereich von 30-300 000 mPa·s bei 25 °C liegen. Bevorzugt werden Siliconharze im Viskositätsbereich von 50-30 000 mPa·s bei 25 °C, besonders bevorzugt im Viskositätsbereich von 50 bis 10 000 mPa·s bei 25 °C gewählt.

Die erfindungsgemäß eingesetzten Organosiliciumverbindungen sind handelsübliche Produkte bzw. nach in der Silicon-Chemie üblichen Verfahren herstellbar.

Bei den erfindungsgemäß eingesetzten Organosiliciumverbindungen kann es sich jeweils um eine Art derartiger Organosiliciumverbindungen wie auch um ein Gemisch verschiedener Organosiliciumverbindungen handeln.
Für die Herstellung der wäßrigen Emulsionen, welche die oben genannten Bestandteile enthalten, können beliebige Emulgatoren (6) verwendet werden, die auch sonst zur Herstellung von Organopolysiloxanemulsionen verwendet werden. Bevorzugt sind nichtionische Emulgatoren.

Geeignete Emulgatoren sind vorzugsweise ionische und nichtionische Emulgatoren. Beispiele dafür sind Sulfonsäure und ihre Salze, die als Emulgator wirken können sowie Alkylsulfonate, wie Natriumlaurylsulfonat, mit aliphatischen Kohlenwasserstoffresten substituierte Benzolsulfonate, wie Natriumdodecylbenzolsulfonat, mit aliphatischen Kohlenwasserstoffresten substituierte Naphthalensulfonate, Polyethylenglycolsulfonat und Laurylphosphat, Polyethylenoxid, Polypropylenoxid, Mischpolymere aus Ethylen- und Propylenoxid, Stearate und Phosphate.

Zusätzlich zu den bisher genannten Bestandteilen können die erfindungsgemäßen Emulsionen noch vorzugsweise weitere Bestandteile, wie vorzugsweise Füllstoffe z.B. Aluminiumoxid, Aluminiumhydroxid, Pigmente und Stabilisatoren enthalten.

Ein weiterer Gegenstand der Erfindung ist ein Verfahren zur Herstellung der erfindungsgemäßen wäßrigen Emulsionen, dadurch gekennzeichnet, daß die Bestandteile (1) bis (7) emulgiert werden.

Bei dem erfindungsgemäßen Verfahren werden die Bestandteile:
(1) in den endständigen Einheiten SiC-gebundene Vinylgruppen aufweisende Organopolysiloxane,
(2) mindestens 3 Si-gebundene Wasserstoffatome aufweisende Organopolysiloxane,
(3) die Anlagerung von Si-gebundenem Wasserstoff an aliphatische Mehrfachbindungen fördernden Katalysator
(4) als Haftungsvermittler geeignete organische Siliciumverbindungen,
(5) Siliconharze,
(6) Emulgator,
(7) Wasser bei vorzugsweise Raumtemperatur (25°C) und vorzugsweise Normaldruck,
miteinander emulgiert.

Das Verfahren kann auch bei reduziertem oder erhöhten Druck und einer erhöhten Temperatur bis auf vorzugsweise 70°C, wobei aber Raumtemperatur schon aus ökonomischen Gründen bevorzugt ist, erfolgen.

Ein weiterer Gegenstand der Erfindung ist ein Verfahren zur Beschichtung von textilen Substraten, dadurch gekennzeichnet, daß die erfindungsgemäßen wäßrigen Emulsionen auf ein nicht getrocknetes Textil aufgebracht werden und die Emulsionen in einem Schritt auf textilen Substraten vulkanisiert und das beschichtete Textil getrocknet wird.

Bei dem erfindungsgemäßen Verfahren können die erfindungsgemäßen wäßrigen Emulsionen auf nasse Textilien, die direkt aus einem Wasch- oder Reinigungsprozeß kommen, aufgebracht werden. Die Vulkanisation der Silikonbeschichtung und das Trocknen und Schrumpfen der Textilien kann in einem Arbeitsgang erfolgen.

Ein weiterer Gegenstand der Erfindung ist ein Vulkanisat herstellbar unter Verwendung einer erfindungsgemäßen wäßrigen Emulsion, die erwärmt wird.

Um eine vorzeitige Vernetzung zu vermeiden, werden die erfindungsgemäßen Emulsionen in mindestens zwei verschiedenen Komponenten aufbewahrt. Eine Komponente enthält die Siloxane mit den ungesättigten aliphatischen Gruppen, eine andere Komponente enthält die Siloxane mit an Si-gebundenem Wasserstoff. Die entsprechenden Hilfs- und Zusatzstoffe können in einer oder in beiden der Komponenten enthalten sein.

Das Aufbringen der erfindungsgemäßen Produkte kann in üblicher Weise erfolgen. Beispiele hierfür sind: Tauchen und Foulardieren, Streichen, Gießen, Sprühen, Aufwalzen, Drucken, Rakeln, mit einem Meyer-Stab oder mit einer Luftbürste oder durch Pflatschen im Walzenauftrag und Siebdruck.

Das Aufbringen des Beschichtungsmaterials findet während des Waschprozesses oder direkt im Anschluß an den Waschprozeß statt.
Die Vulkanisation erfolgt in einem Arbeitsgang zeitgleich mit dem Trocknungs- und Schrumpfprozeß.

Bei Geweben, die gewaschen und getrocknet werden müssen, dies trifft insbesondere für Kunstfasergewebe zu, kann die erfindungsgemäße Zusammensetzung direkt auf das noch nasse Gewebe sofort nach dem Waschvorgang aufgebracht werden. Die Vulkanisation erfolgt zeitgleich mit dem Trocknungsvorgang. Dies ist insbesondere bei Geweben, die zur Herstellung von Airbags verwendet werden, gewünscht und besonders vorteilhaft.

Nach dem Aufbringen nach den oben genannten Methoden, erfolgt die Trocknung und Vulkanisation des beschichteten Gewebes üblicherweise in einem Wärmekanal, der durch Heißluft, Infrarotlicht, Gasbrenner, Wärmetauscher oder andere Energiequellen beheizt werden kann. Um Blasenbildung zu vermeiden, wird in einer ersten Zone bei Temperaturen von vorzugsweise 60 - 150°C, bevorzugt 80 - 130°C, besonders bevorzugt 90 - 120°C, vorgetrocknet und in einer zweiten Zone bei vorzugsweise Temperaturen bis zu 300°C, vernetzt. Schon wegen der begrenzten Wärmebeständigkeit der meisten Kunstfasern ist ein Temperaturbereich von 120-190°C bevorzugt. Die zur Vulkanisation benötigte Verweilzeit hängt vom Beschichtungsgewicht, von der Wärmeleitfähigkeit des Gewebes sowie vom Wärmeübergang auf das beschichtete Textil ab und kann zwischen 0,5 und 30 Minuten betragen. Die Trocknung und Vulkanisation kann außer in den meist üblichen Wärmekanälen auch durch andere technische Trocknungsanlagen, wie Heißwalzenkalander, beheizbare Kaschierpressen, beheizbare Plattenpressen oder heiße Kontaktwalzen sowie durch Schwebetrockner erfolgen. Auch durch Mikrowellen können die erfindungsgemäß beschichteten Textilien getrocknet und vulkanisiert werden.

Die erfindungsgemäßen Produkte können zur Beschichtung oder Ausrüstung von textilen Materialien aller Art verwendet werden. Es können Gewebe aller Webarten, Vliese, Gestricke, Gelege, Gewirke aus allen üblichen Garnen und Fasern, Naturfasern wie Baumwolle, Glas, Wolle, Seide, Kunstfasern, wie Polyamide, Polyester Viskose, Polyethylen, Polypropylen, Polyurethan, Seide, Viskose, Cellulose beschichtet werden. Die Einsatzgebiete dieser so ausgerüsteten Textilien sind vielfältig. Beispiele hierfür sind: Sportkleidung, Sportartikel, wie Segel, Bootsabdeckungen oder Materialien für Rucksäcke und Zelte und Schutzkleidung. Technische Anwendungen, wie Abdeckplanen, Förderbänder, Kompensatoren, faltbare Behälter.

Besonders vorteilhaft können nach dem erfindungsgemäßen Verfahren mit den erfindungsgemäßen Produkten ausgerüstete Polyamid- oder Polyestergewebe zur Herstellung von Airbags für Kraftfahrzeuge verwendet werden.

Technische Gewebe müssen meist gewaschen, getrocknet und geschrumpft werden, um den hohen Anforderungen gerecht zu werden. Dies trifft insbesondere bei der Verwendung zur Herstellung von Airbags zu. Alle bisher bekannten Beschichtungsverfahren benötigen nach dem Waschen und Trocknen einen separaten Beschichtungsvorgang. Nach dem erfindungsgemäßen Verfahren kann das erfindungsgemäße Beschichtungsmaterial direkt im oder nach dem Waschprozeß aufgebracht werden und während des Trocknungsvorgangs vulkansiert werden. Ein zusätzlicher Beschichtungsvorgang ist nicht mehr nötig. Dies bedeutet eine signifikante Einsparung von Energie, Zeit und Kosten.

Zur Herstellung von Airbags werden häufig beschichtete Gewebe verwendet. Erfindungsgemäß beschichtete Gewebe zeigen einige technische Vorteile. Die erfindungsgemäße Beschichtung bietet Schutz gegen die heißen Gase des Treibsatzes, Garn an Garn Reibung, die zur Reduktion der Reißfestigkeit führt und durch Vibrationen hervorgerufen wird, kann durch eine erfindungsgemäße Elastomerbeschichtung verhindert werden. Die erfindungsgemäße Beschichtung verleiht dem Gewebe eine bessere Alterungsbeständigkeit.

Ein Vorteil des erfindungsgemäßen Beschichtungsverfahrens ist, daß die Kosten eines zusätzlichen Beschichtungsschrittes entfallen.
Erfindungsgemäß wird ein wäßriges Siliconsystem zur Verfügung gestellt, das direkt nach dem Waschvorgang auf das noch nasse Gewebe aufgebracht und während des Trocknungsvorganges vulkanisiert werden kann. Dieses erfindungsgemäße Beschichtungssystem ist ein wäßriges Siliconbeschichtungssystem, das nach der Vulkanisation exakt das für einen Airbag passende Eigenschaftsprofil aufweist.

### Beispiele:

### Beispiel 1:

4 000 g einer wäßrigen Emulsion, die 800 g eines Vinyldimethylsiloxyeinheiten als endständige Einheiten aufweisenden Dimethylpolysiloxanes mit einer Viskosität von 1 000 mPa·s,
800 g eines Vinyldimethylsiloxyeinheiten als endständige Einheiten aufweisenden Dimethylpolysiloxanes mit einer Viskosität von 20 000 mPa·s,
20 g eines Platin-Divinyltetramethyldisiloxan-Komplexes mit einem Gehalt von
1 Gew.% Platin,
10 g Ethinylcyclohexanol,
90 g eines durch Trimethylsiloxygruppen endblockierten Diorganopolysiloxans mit 50 Mol% Methylhydrogensiloxaneinheiten und 50 Mol% Dimethylsiloxaneinheiten und einer Viskosität von 120 mPa·s sowie
150 g einer als Haftmittel geeigneten Organosiliciumverbindung, enthält,
die durch Umsetzung von 100 g Vinyltriacetoxysilan mit 130 g des Silans der Formel 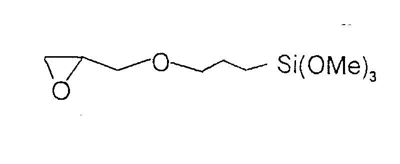 hergestellt wurde,
wurden unter Rühren bei Raumtemperatur (25°C) und Normaldruck hergestellt.

### 300 g einer wäßrigen Emulsion eines Siliconharzes der Formel

(Me₃SiO_{1/2})ₐ (MeSiO_{3/2})_{b}

mit einer Viskosität von 2 000 mPa·s, werden bei Raumtemperatur (25°C) und Normaldruck in einer Tauchwanne vorgelegt. Mit einer Pflatschwalze wird diese Emulsion auf ein nasses 235dtex Polyamidgewebe übertragen. Das beschichtete Gewebe durchläuft einen Wärmekanal, der in der ersten Zone eine Lufttemperatur von 100 °C und in einer zweiten Zone eine Lufttemperatur von 180 °C aufweist. Die Verweilzeit in diesem Wärmekanal ist 3 Minuten.
Es wird ein Gewebe mit einer Siliconbeschichtung von 34 g/m erhalten.

Das Gewebe weist folgende Eigenschaften auf:

| | |
|---|---|
| Luftdurchlässigkeit nach DIN 53530: | 1,18 l/dm /min. |
| Haftung der Beschichtung nach DIN 53530: | 85 N/5 cm |
| Scrub Test nach ISO 5981 | mind. 500 |

### Beispiel 2:

Die in Beispiel 1 beschriebene Vorgehensweise wird wiederholt, mit dem Unterschied, daß keine Siliconharzkomponente eingesetzt wird.

Es wird ein Gewebe mit folgenden Eigenschaften erhalten:

| | |
|---|---|
| Beschichtungsgewicht | 29 g/m |
| Luftdurchlässigkeit nach DIN 53887 | 1,68 l/dm /min. |
| Haftung der Beschichtung nach DIN 53530 | 76 N/5 cm |
| Scrub Test nach ISO 5981 | mind. 200 |

### Beispiel 3:

Die in Beispiel 1 beschriebene Vorgehensweise wird wiederholt, mit dem Unterschied, daß die in Beispiel 1 beschriebene Formulierung mit 4 000 g Wasser vermischt wurde. Es wird ein Gewebe mit folgenden Eigenschaften erhalten:

| | |
|---|---|
| Beschichtungsgewicht | 17 g/m |
| Luftdurchlässigkeit nach DIN 53887 | 19,1 l/dm /min. |
| Haftung der Beschichtung nach DIN 53530 | 150 N/5 cm |
| Scrub Test nach ISO 5981 | mind. 400 |

### Beispiel 4:

Die in Beispiel 1 beschriebene Vorgehensweise wurde wiederholt, mit dem Unterschied, daß die in Beispiel 1 beschriebenen Haftvermittler nicht mitverwendet wurden.

Es wird ein Gewebe mit folgenden Eigenschaften erhalten:

| | |
|---|---|
| Beschichtungsgewicht | 32 g/m |
| Luftdurchlässigkeit nach DIN 53887 | 1,44 l/dm /min. |
| Haftung der Beschichtung nach DIN 53530 | 26 N/5 cm |
| Scrub Test nach ISO 5981 | mind. 180 |

### Beispiel 5:

Die in Beispiel 1 verwendete und beschriebene Formulierung wurde mit einem Messerrakel auf ein Polyestergewebe aufgetragen.

Es wurde eine Beschichtung mit folgenden Eigenschaften erhalten:

| | |
|---|---|
| Beschichtungsgewicht | 82 g/m |
| Luftdurchlässigkeit nach DIN 53887 | 0,28 l/dm /min. |
| Haftung der Beschichtung nach DIN 53530 | 105 N/5 cm |
| Scrub Test nach ISO 5981 | mind. 360 |

Oberflächenklebrigkeit der beschichteten Gewebe:

Die beschichteten Gewebe aus den Beispielen 1-5 wurden Beschichtung auf Beschichtung (face to face) in einem Wärmeofen plaziert und unter einem Druck von 500 kp/m 4 Wochen bei 150 °C gelagert. Nach der Lagerzeit konnte kein Verkleben oder Verschweißen der Oberflächen festgestellt werden.

## Patentansprüche

1. Wäßrige Emulsionen, dadurch gekennzeichnet, daß sie
(1) in den endständigen Einheiten SiC-gebundene Vinylgruppen aufweisende Organopolysiloxane,
(2) mindestens 3 Si-gebundene Wasserstoffatome aufweisende Organopolysiloxane der allgemeinen Formel
(CH₃)₃SiO-(SiHRO)ₒ- (SiR₂O)ₚ-Si(CH₃)₃,
wobei R gleiche oder verschiedene Kohlenwasserstoffreste bedeutet, die substituiert sein können und o/p im Verhältnis 1:0 bis 1:20 liegt
(3) die Anlagerung von Si-gebundenem Wasserstoff an aliphatische Mehrfachbindungen fördernden Katalysator,
(4) als Haftungsvermittler geeignete organische Siliciumverbindungen,
(5) Siliconharze,
(6) Emulgator und
(7) Wasser,
enthalten.

2. Wäßrige Emulsion nach Anspruch 1, dadurch gekennzeichnet, daß es sich bei den (1) endständige Einheiten SiC-gebundene Vinylgruppen aufweisenden Organopolysiloxanen um solche der allgemeinen Formel
(CH₂=CH)ₓSiR₃₋ₓ₋O(SiR₂O)ₙSiR₃₋ₓ(CH=CH₂)ₓ
handelt, wobei R die oben angegebene Bedeutungen hat und
X 1, 2 oder 3 und
n eine Zahl mit einem solchen Wert ist, daß die Diorganopolysiloxane (1) eine durchschnittliche Viskosität von 100 - 500 000 mPa·s bei 25 °C haben.

3. Wäßrige Emulsion nach einem oder mehreren der Ansprüche 1 bis 2, dadurch gekennzeichnet, daß es sich bei (5) den Siliconharzen um Siliconharze der allgemeinen Formel (R₃SiO_{1/2})ₐ(RSiO_{3/2})_{b}, sogenannte MT-Harze und/oder MQ-Harze der allgemeinen Formel(R₃SiO_{1/2})ₐ(SiO_{4/2})_{b} handelt, wobei R die oben angegebene Bedeutung hat und das Verhältnis a zu b so gewählt wird, daß die Siliconharze in einem Viskositätsbereich von 30 - 300000 mPa·s bei 25 °C liegen.

4. Verfahren zur Herstellung von wäßrigen Emulsionen nach einem oder mehreren der Ansprüche 1 bis 3, dadurch gekennzeichnet, daß die Bestandteile 1-7 emulgiert werden.

5. Vulkanisat, herstellbar unter Verwendung einer wäßrigen Emulsion, nach einem oder mehreren der Ansprüche 1 bis 3 oder herstellbar nach Anspruch 4, indem die Emulsion erwärmt wird.

6. Verfahren zur Beschichtung von textilen Substraten, dadurch gekennzeichnet, daß wäßrige Emulsionen nach einem oder mehreren der Ansprüche 1 bis 3 oder herstellbar nach dem Verfahren nach Anspruch 4 auf ein nicht getrocknetes Textil aufgebracht werden und die Emulsionen in einem Schritt auf textilen Substraten vulkanisiert und das beschichtete Textil getrocknet wird.

7. Beschichtete textile Substrate, dadurch gekennzeichnet, daß textile Substrate mit Emulsionen nach einem oder mehreren der Ansprüche 1 bis 3 oder herstellbar nach Anspruch 4, beschichtet sind.

8. Beschichtetes textiles Substrat nach Anspruch 7, dadurch gekennzeichnet, daß das textile Substrat ein Airbagmaterial ist.

## Claims

1. Aqueous emulsions characterized in that they comprise
(1) organopolysiloxanes with SiC-attached vinyl groups in the terminal units,
(2) organopolysiloxanes with at least 3 Si-attached hydrogen atoms, of the general formula
(CH₃)₃SiO-(SiHRO)ₒ-(SiR₂O)ₚ-Si(CH₃)₃,
where R denotes identical or different hydrocarbyl radicals which may be substituted and o/p is within the range from 1:0 to 1:20
(3) a catalyst promoting the addition of Si-attached hydrogen to aliphatic multiple bonds,
(4) organosilicon adhesion promoters,
(5) silicone resins,
(6) an emulsifier and
(7) water.

2. Aqueous emulsion according to Claim 1 characterized in that the said organopolysiloxanes (1) have the general formula
(CH₂=CH)ₓSiR₃₋ₓ₋O (SiR₂O)ₙSiR₃₋ₓ(CH=CH₂)ₓ
where R has the abovementioned meanings and
x is 1, 2 or 3, and
n is a number such that the said diorganopolysiloxanes (1) have an average viscosity of 100-500,000 mPaxs at 25°C.

3. Aqueous emulsion according to one or more of Claims 1 to 2 characterized in that the said silicone resins (5) are silicone resins of the general formula (R₃SiO_{1/2})ₐ(RSiO_{3/2})_{b}, MT resins and/or MQ resins of the general formula (R₃SiO_{1/2})ₐ(SiO_{4/2})_{b}, where R is as defined above and the ratio of a to b is such that the silicone resins are within the viscosity range of 30-300,000 mPaxs at 25°C.

4. Process for preparing aqueous emulsions according to one or more of Claims 1 to 3, characterized in that it comprises emulsifying the said ingredients 1-7.

5. Vulcanizate preparable using an aqueous emulsion according to one or more of Claims 1 to 3 or preparable according to Claim 4 by heating the emulsion.

6. Process for coating textile substrates, characterized in that it comprises applying aqueous emulsions according to one or more of Claims 1 to 3 or preparable according to the process according to Claim 4 to an undried textile and in one step vulcanizing the emulsions on textile substrates and drying the coated textile.

7. Coated textile substrates characterized in that textile substrates have been coated with emulsions according to one or more of Claims 1 to 3 or preparable according to Claim 4.

8. Coated textile substrate according to Claim 7 characterized in that the textile substrate is an airbag material.

## Revendications

1. Emulsions aqueuses caractérisées en ce qu'elles comprennent :
(1) des organopolysiloxanes comprenant des groupements vinyle liés par Si-C sur les unités terminales,
(2) des organopolysiloxanes comprenant au moins 3 atomes d'hydrogène liés à Si, de formule générale
(CH₃)₃SiO-(SiHRO)ₒ-(SiR₂O)ₚ-Si(CH₃)₃
dans laquelle R désigne des radicaux hydrocarbures identiques ou différents qui peuvent être substitués, et o/p est compris entre 1:0 et 1:20,
(3) un catalyseur promouvant l'addition d'hydrogène lié à Si à des liaisons aliphatiques multiples,
(4) des promoteurs d'adhésion du type organosilicium,
(5) des résines silicones,
(6) un émulsifiant et
(7) de l'eau.

2. Emulsion aqueuse selon la revendication 1, caractérisée en ce que lesdits organopolysiloxanes (1) comprenant des groupements vinyle liés par Si-C sur les unités terminales, ont la formule générale
(CH₂=CH)ₓSiR₃₋ₓ-O(SiR₂O)ₙSiR₃₋ₓ(CH=CH₂)ₓ
dans laquelle R a la signification indiquée ci-dessus et
x est 1, 2 ou 3,
n est un nombre tel que lesdits diorganopolysiloxanes (1) ont une viscosité moyenne de 100 - 500 000 mPa.s à 25°C.

3. Emulsion aqueuse selon l'une ou plusieurs des revendications 1 à 2, caractérisée en ce que les résines silicones (5) sont des résines silicones de formule générale (R₃SiO_{1/2})ₐ(RSiO_{3/2})_{b}, des résines MT et/ou des résines MQ de formule générale (R₃SiO_{1/2})ₐ(SiO_{4/2})_{b}, où R est tel que défini ci-dessus et le rapport de a à b est choisi de manière telle que les résines silicones ont une viscosité comprise dans la plage 30 - 300 000 mPa.s à 25°C.

4. Procédé pour la fabrication d'émulsions aqueuses selon l'une ou plusieurs des revendications 1 à 3, caractérisé en ce qu'on émulsifie les ingrédients 1-7.

5. Vulcanisat pouvant être fabriqué en utilisant une émulsion aqueuse selon l'une ou plusieurs des revendications 1 à 3, ou pouvant être fabriqué selon la revendication 4, en chauffant l'émulsion.

6. Procédé pour le revêtement de substrats textiles, caractérisé en ce qu'on applique des émulsions aqueuses selon l'une ou plusieurs des revendications 1 à 3, ou pouvant être fabriquées selon le procédé de la revendication 4, sur un textile non-séché, et en ce qu'en une seule étape, on vulcanise les émulsions sur des substrats textiles et on sèche le textile enduit.

7. Substrats textiles enduits, caractérisés en ce qu'on revêt des substrats textiles d'émulsions selon l'une ou plusieurs des revendications 1 à 3, ou pouvant être fabriquées selon la revendication 4.

8. Substrat textile enduit selon la revendication 7, caractérisé en ce que le substrat textile est un matériau pour airbag.
